(19) Europäisches Patentamt
European Patent Office
Office européen des brevets

(11) EP 2 608 291 A1

(12) EUROPEAN PATENT APPLICATION
published in accordance with Art. 153(4) EPC

(43) Date of publication:
26.06.2013 Bulletin 2013/26

(51) Int Cl.:
H01M 2/16 (2006.01)

(21) Application number: 11822857.6

(22) Date of filing: 29.09.2011

(86) International application number:
PCT/JP2011/072307

(87) International publication number:
WO 2013/046383 (04.04.2013 Gazette 2013/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(71) Applicant: Hitachi, Ltd.
Tokyo 100-8280 (JP)

(72) Inventors:
• FURUTANI, Takahiro
Otokuni-gun
Kyoto 618-8525 (JP)

• KOJIMA, Eri
Otokuni-gun
Kyoto 618-8525 (JP)
• WATANABE, Toshiyuki
Otokuni-gun
Kyoto 618-8525 (JP)
• KOYAMA, Kunihiko
Otokuni-gun
Kyoto 618-8525 (JP)

(74) Representative: Diehl & Partner GbR
Patentanwälte
Augustenstrasse 46
80333 München (DE)

(54) **SEPARATOR FOR NONAQUEOUS ELECTROLYTE SECONDARY BATTERIES, METHOD FOR PRODUCING SAME, AND NONAQUEOUS ELECTROLYTE SECONDARY BATTERY**

(57)     [Problems] A non-aqueous electrolyte secondary battery having excellent load characteristics and excellent charge/discharge cycle characteristics, a separator that can constitute the non-aqueous electrolyte secondary battery, and a method for producing the separator are provided.

[Solving Means] The separator for non-aqueous electrolyte secondary batteries according to the present invention includes at least a resin (A) having a crosslinked structure. The resin (A) having the crosslinked structure is obtained by applying energy rays to at least an oligomer that is capable of being polymerized by irradiation with energy rays, and the resin (A) has a glass transition temperature higher than 0°C and lower than 80°C. The separator for non-aqueous electrolyte secondary batteries according to the present invention can be produced using a method of the present invention including the steps of applying a separator-forming composition containing an oligomer and a solvent to a base substrate, forming a resin (A) by irradiation with energy rays, and forming pores by drying a coating film after the resin (A) has been formed. Furthermore, the non-aqueous electrolyte secondary battery of the present invention includes the separator for non-aqueous electrolyte secondary batteries according to the present invention.

FIG. 1 (a)

FIG. 1 (b)

**Description**

Technical Field

The present invention relates to a non-aqueous electrolyte secondary battery having excellent load characteristics and excellent charge/discharge cycle characteristics, a separator that can constitute the non-aqueous electrolyte secondary battery, and a method for producing the separator.

Background Art

Non-aqueous electrolyte secondary batteries such as lithium secondary batteries are widely used as power sources for portable devices such as mobile phones and notebook personal computers, because of its property of having a high energy density. Along with enhancements in the performance of portable devices, improving various battery characteristics and the level of safety are getting to be important issues.

Current lithium secondary batteries use, for example, a polyolefin porous film having a thickness of approximately 20 to 30 $\mu$m as a separator to be interposed between a positive electrode and a negative electrode. However, when producing such a polyolefin porous film, complex processes such as biaxial drawing and extraction of a pore forming agent are employed in order to form fine and uniform pores. This incurs a cost increase and makes the separator expensive under the present circumstances.

As a material for the separator, polyethylene having a melting point of approximately 120 to 140°C is used in order to ensure a so-called shutdown effect in which the safety of a battery in the event of short circuiting or the like occurring is improved by causing a resin constituting the separator to melt at a temperature less than or equal to the thermal runaway temperature of the battery so as to close pores and thereby increasing the internal resistance of the battery. However, for example, if the temperature of the battery further rises after shutdown, the melted polyethylene will easily flow and may cause a so-called meltdown in which the separator film is damaged. In such a case, the positive and negative electrodes are brought into direct contact with each other, the temperature further rises, and at worst, there is the risk of ignition occurring.

In order to prevent such occurrence of short circuiting due to a meltdown, a method using a separator constituted by using a heat resistant resin has been proposed. For example, Patent Document 1 proposes a non-aqueous electrolyte secondary battery that includes a crosslinked structure and is constituted by using a positive electrode or negative electrode that has an isolating material serving as a separator on the surface thereof. With the technique disclosed in Patent Document 1, it is possible to improve the safety and reliability of the non-aqueous electrolyte secondary battery at high temperatures.

Prior Art Document

Patent Document

Patent document 1: JP 2010-170770A

Disclosure of Invention

Problem to be Solved by the Invention

Incidentally, even with non-aqueous electrolyte secondary batteries achieving a high level of safety and reliability (in particular, a high level of safety and reliability at high temperatures) such as described above, it is likely that demand will arise for further improvements in their load characteristics and charge/discharge cycle characteristics as a result of future enhancements in the performance of devices to which the batteries are applied. In terms of this, there is still room for improvement in the technique disclosed in Patent Document 1.

The present invention has been achieved in light of such circumstances, and it is an object of the present invention to provide a non-aqueous electrolyte secondary battery having excellent load characteristics and excellent charge/discharge cycle characteristics, a separator that can constitute the non-aqueous electrolyte secondary battery, and a method for producing the separator.

Means for Solving the Problem

A separator for non-aqueous electrolyte secondary batteries according to the present invention can achieve the above-described object, and includes at least a resin (A) having a crosslinked structure. The resin (A) having the crosslinked structure is obtained by applying energy rays to at least an oligomer that is capable of being polymerized by irradiation with energy rays, and the resin (A) has a glass transition temperature higher than 0°C and lower than 80°C.

The separator for non-aqueous secondary batteries according to the present invention can be produced by a production method of the present invention that includes the steps of applying a separator-forming composition to a base substrate, the separator-forming composition containing at least a solvent and an oligomer that is capable of being polymerized by irradiation with energy rays, forming a resin (A) having a crosslinked structure by applying energy rays to a coating film of the separator-forming composition applied to the base substrate, and forming pores by drying the coating film of the separator-forming composition that has been irradiated with energy rays.

Furthermore, a non-aqueous electrolyte secondary battery of the present invention includes, as constituent elements, at least a positive electrode in which a positive-electrode material mixture layer is formed on a surface of a current collector, a negative electrode in which a negative-electrode material mixture layer is formed on a surface of a current collector, and a porous separator, the separator being the separator for non-aqueous electrolyte secondary batteries according to the present invention.

Effects of the Invention

According to the present invention, it is possible to provide a non-aqueous electrolyte secondary battery having excellent load characteristics and excellent charge/discharge cycle characteristics, a separator that can constitute the non-aqueous electrolyte secondary battery, and a method for producing the separator.

Brief Description of Drawings

[FIG. 1] FIGS. 1 are diagrams schematically showing an example of a non-aqueous electrolyte secondary battery of the present invention, FIG. 1(a) being a plan view of the battery and FIG. 1(b) being a partial vertical cross-sectional view thereof.
[FIG. 2] FIG. 2 is a perspective view of the non-aqueous electrolyte secondary battery shown in FIG. 1.

Description of the Invention

A separator for non-aqueous electrolyte secondary batteries according to the present invention (hereinafter also simply referred to as a "separator") contains at least a resin (A) having a crosslinked structure.

The resin (A) contained in the separator of the present invention is a resin having a crosslinked structure at least in part thereof (crosslinking resin). Therefore, even if the temperature inside a non-aqueous electrolyte secondary battery that includes the separator of the present invention (the non-aqueous electrolyte secondary battery of the present invention) becomes high, the separator does not easily become deformed due to shrinkage thereof or melting of the resin (A) and can keep favorable shape thereof. As a result, the occurrence of short circuiting between a positive electrode and a negative electrode is suppressed. Accordingly, the non-aqueous electrolyte secondary battery of the present invention that includes the separator of the present invention has a high level of safety at high temperatures.

Furthermore, the resin (A) has a glass transition temperature (Tg) that is higher than 0°C and preferably higher than or equal to 10°C and is lower than 80°C and preferably lower than or equal to 60°C. With the resin (A) having such a Tg, since it is possible to form micropores favorable for the separator and provide the separator with favorable lithium-ion permeability, the charge/discharge cycle characteristics and load characteristics of the non-aqueous electrolyte secondary battery using that separator (the non-aqueous electrolyte secondary battery of the present invention) can be improved. In other words, if the Tg of the resin (A) is too low, micropores will be easily filled up and it becomes difficult to adjust the lithium-ion permeability of the separator. If the Tg of the resin (A) is too high, shrinkage on curing will occur when producing the separator and favorable micropores will not be easily formed, as a result of which it is difficult to adjust the lithium-ion permeability of the separator.

Note that even if a separator is produced with a crosslinking resin having a Tg lower than the above-described values or a crosslinking resin having a Tg higher than the above-described values using a method similar to the method of the present invention, it is possible to obtain the separator having fine and uniform micropores by, for example, causing the separator to contain a material, such as inorganic particles, that supports the formation of pores. However, in the present invention, provision of a separator having a large number of fine and uniform micropores is enabled by using the resin (A) having an appropriate Tg.

The Tg of the resin (A) as used in the present specification refers to a value obtained by measuring a sheet (separator) that contains the resin (A) obtained using one of the methods to be described later in Examples, using a differential scanning calorimeter (DSC) according to the provision of JIS K 7121.

The resin (A) is obtained by applying energy rays to an oligomer that can be polymerized by irradiation with energy rays and thereby polymerizing the oligomer. Forming the resin (A) by the polymerization of the oligomer makes it possible to constitute a separator that has high flexibility and does not easily come off for example when integrated with an electrode or a porous substrate (details of which will be described later), and also to adjust the Tg of the resin (A) to the above-described values.

Furthermore, it is preferable when forming the resin (A) to use a monomer that can be polymerized by irradiation with energy rays, together with the oligomer.

As will be discussed in detail later, the separator containing the resin (A) is preferably produced through the steps of preparing a separator-forming composition that includes an oligomer or the like for forming the resin (A) and a solvent or the like, applying the separator-forming composition to a base substrate so as to form a coating film, and forming the resin (A) by irradiating the coating with energy rays. Here, adding the above-described monomer to the separator-forming composition together with the oligomer makes it easy to adjust the viscosity of the separator-forming composition, and increases the applicability of the separator-forming composition to the base substrate. Accordingly, a separator having more favorable properties can be obtained. Furthermore, as a result of using the monomer, the crosslinking density of the resin (A) can be easily controlled and it becomes easier to adjust the Tg of the resin (A).

Specific examples of the resin (A) include an acrylic resin formed from an acrylic resin monomer [alkyl (meth) acrylate such as methyl methacrylate or methyl acrylate, and a derivative thereof], an oligomer thereof, and a crosslinking agent; a crosslinking resin formed from urethane acrylate and a crosslinking agent; a crosslinking resin formed from epoxy acrylate and a crosslinking agent; and a crosslinking resin formed from polyester acrylate and a crosslinking agent. In any of the above-described resins, examples of the crosslinking agents include divalent or polyvalent acrylic monomers (bifunctional acrylate, trifunctional acrylate, tetrafunctional acrylate, pentafunctional acrylate, hexafunctional acrylate, and the like) such as tripropylene glycol diacrylate, 1,6-hexanediol diacrylate, tetraethylene glycol diacrylate, polyethylene glycol diacrylate, dioxane glycol diacrylate, tricyclodecane dimethanol diacrylate, dimethylol tricyclodecane diacrylate, ethylene-oxide-modified trimethylol propane triacrylate, dipentaerythritol pentaacrylate, caprolactone-modified dipentaerythritol hexaacrylate, and ε-caprolactone-modified dipentaerythritol hexaacrylate.

Accordingly, if the resin (A) is the above-listed acrylic resin, an oligomer of any of the above-listed acrylic resin monomers can be used as the oligomer that can be polymerized by irradiation with energy rays (hereinafter simply referred to as the "oligomer"), and any of the above-listed acrylic resin monomers and crosslinking agents can be used as the monomer that can be polymerized by irradiation with energy rays (hereinafter simply referred to as the "monomer").

If the resin (A) is the above-listed crosslinking resin formed from urethane acrylate and a crosslinking agent, urethane acrylate can be used as the oligomer, and any of the above-listed crosslinking agents or the like can be used as the monomer.

If the resin (A) is the above-listed crosslinking resin formed from epoxy acrylate and a crosslinking agent, epoxy acrylate can be used as the oligomer, and any of the above-listed crosslinking agents or the like can be used as the monomer.

If the resin (A) is the above-listed crosslinking resin formed from polyester acrylate and a crosslinking agent, polyester acrylate can be used as the oligomer, and any of the above-listed crosslinking agents or the like can be used as the monomer.

In synthesis of the resin (A), two or more of urethane acrylate, epoxy acrylate, and polyester acrylate, which are listed above, may be used as the oligomer, and two or more of bifunctional acrylate, trifunctional acrylate, tetrafunctional acrylate, pentafunctional acrylate, and hexafunctional acrylate, which are listed above, may be used as the crosslinking agent (monomer).

Examples of the resin (A) also include a crosslinking resin derived from unsaturated polyester resin formed from a mixture of a styrene monomer and an ester composition produced by condensation polymerization of divalent or polyvalent alcohol and dicarboxylic acid; and various types of polyurethane resin generated by reaction of polyisocyanate and polyol.

Accordingly, if the resin (A) is the crosslinking resin derived from unsaturated polyester resin, the above ester composition can be used as the oligomer, and the styrene monomer can be used as the monomer.

If the resin (A) is one of the various types of polyurethane resin generated by the reaction of polyisocyanate and polyol, examples of polyisocyanate include hexamethylene diisocyanate, phenylene diisocyanate, toluene diisocyanate (TDI), 4.4'-diphenyl methane diisocyanate (MDI), isophorone diisocyanate (IPDI), and bis-(4-isocyanato cyclohexyl) methane, and examples of polyol include polyether polyol, polycarbonate polyol, and polyester polyol.

Accordingly, if the resin (A) is one of the various types of polyurethane resin generated by the reaction of polyisocyanate and polyol, the above-listed polyol can be used as the oligomer, and the above-listed polyisocyanate can be used as the monomer.

When forming the above-listed resin (A), a single functional monomer such as isobornyl acrylate, methoxy polyethylene glycol acrylate, or phenoxy polyethylene glycol acrylate may be used in combination. Accordingly, if the resin (A) includes a structural part derived from such a single functional monomer, the above-listed single functional monomer can be used as the monomer in combination with the above-listed oligomer and other monomer.

However, a single functional monomer tends to remain in the formed resin (A) as an unreacted substance, and there is the risk that such an unreacted substance remaining in the resin (A) will leach into the non-aqueous electrolyte in the non-aqueous electrolyte secondary battery and may inhibit battery reaction. For this reason, it is preferable for the oligomer and the monomer, which are used to form the resin (A), to be bi- or higher functional. It is also preferable for the oligomer and the monomer, which are used to form the resin (A), to be hexa- or lower functional.

If the oligomer and the monomer are used in combination to form the resin (A), the ratio in mass between the oligomer and the monomer to be used is preferably in the range of 20:80 to 95:5, and more preferably, in the range of 65:35 to 90:10, from the viewpoint of facilitating the adjustment of the Tg. In other words, in the resin (A) formed from the oligomer and the monomer, the ratio in mass between the oligomer-derived unit and the monomer-derived unit is preferably in the range of 20:80 to 95:5, and more preferably, in the range of 65:35 to 90:10.

Although the separator of the present invention may be formed with only the resin (A), it may also contain inorganic particles (B) together with the resin (A). Containing the inorganic particles (B) can further improve the strength and dimensional stability of the separator.

Specific examples of the inorganic particles (B) include inorganic oxide particles such as iron oxide, silica ($SiO_2$), alumina ($Al_2O_3$), titania ($TiO_2$), and $BarTiO_3$; inorganic nitride particles such as aluminum nitride and silicon nitride; poorly soluble ionic crystal particles such as calcium fluoride, barium fluoride, and barium sulfate; covalent crystal particles such as silicon and diamond; and clay particles such as montmorillonite. Here, the above-listed inorganic oxide particles may be particles of mineral resource-derived materials such as boehmite, zeolite, apatite, kaoline, mullite, spinel, olivine, and mica, or particles of artificial materials thereof. Furthermore, particles may be used in which electrical insulation properties are imparted by covering the surface of a conductive material, examples of which include metals and conductive oxides such as $SnO_2$ and tin-indium oxide (ITO) and carbonaceous materials such as carbon black and graphite, with a material having electrical insulation properties (e.g., the above-listed inorganic oxides). As the inorganic particles, the above-listed inorganic particles may be used singly or in a combination of two or more. Among the above-listed inorganic particles, the inorganic oxide particles are more preferable, and alumina, titania, silica, and boehmite are even more preferable.

The average particle size of the inorganic particles (B) is preferably 0.001 $\mu$m or greater, and more preferably, 0.1 $\mu$m or greater. Also, it is preferably 15 $\mu$m or less, and more preferably, 1 $\mu$m or less. Note that the average particle size of the inorganic particles (B) can be defined as, for example, a number-average particle size measured by dispersing the inorganic particles (B) in a medium in which the particles are not dissolved, using a laser scattering particle distribution analyzer (for example, "LA-920" manufactured by Horiba Ltd.) (the average particle size of the inorganic particles (B) in Examples described later is a value measured using this method).

The form of the inorganic particles (B) may, for example, be a nearly spherical shape, or may be a plate-like or fibrous shape. However, from the viewpoint of increasing the resistance of the separator to short circuiting, the inorganic particles (B) are preferably plate-like particles, or particles having a secondary particle structure in which primary particles are aggregated. In particular, in terms of improving the porosity of the separator, the inorganic particles (B) are more preferably particles having a secondary particle structure in which primary particles are aggregated. Typical examples of the plate-like particles and the secondary particles include plate-like alumina particles, plate-like boehmite particles, secondary particles of alumina, and secondary particles of boehmite.

In the case where the inorganic particles (B) are contained in the separator of the present invention, the ratio $V_A/V_B$ between the volume $V_A$ of the resin (A) and the volume $V_B$ of the inorganic particles (B) is preferably 0.6 or above, and more preferably, 3 or above. In the case of the ratio $V_A/V_B$ falling within the above values, even if, for example, the separator is bent such as when constituting a wound electrode group (in particular, a wound electrode group having a flat-shaped cross section, used in a prismatic battery or the like), the occurrence of defects such as cracks can be more favorably suppressed by the action of the resin (A) having excellent flexibility. Accordingly, the separator can have excellent resistance to short circuiting.

Furthermore, in the case where the inorganic particles (B) are contained in the separator of the present invention, the ratio $V_A/V_B$ is preferably 9 or less, and more preferably, 8 or less. In the case of the ratio $V_A/V_B$ falling within the above values, the effects of improving the strength and dimensional stability of the separator, which are brought about by including the inorganic particles (B) in the separator, can more effectively be enhanced.

Furthermore, in the case where the inorganic particles (B) are contained in the separator of the present invention and if a porous substrate made of a fibrous substance (C) described later is not used, it is preferable for the resin (A) and the inorganic particles (B) to constitute the main part of the separator. Specifically, the total volume ($V_A+V_B$) of the resin (A) and the inorganic particles (B) is preferably 50 vol% or more of the total volume of the constituent components of the separator (which is the volume excluding pore portions; the same applies to the volume ratio of the constituent components of the separator), and more preferably, 70 vol% or more (it may be 100 vol%). On the other hand, if a porous substrate made of the fibrous substance (C) described later is used for the separator of the present invention, the total volume ($V_A+V_B$) of the resin (A) and the inorganic particles (B) is preferably 20 vol% or more of the total volume of the constituent components of the separator, and more preferably, 40 vol% or more.

Accordingly, in the case where the inorganic particles (B) are contained in the separator-forming composition, it is desirable for the amount of the inorganic particles (B) added to be adjusted such that, in the produced separator, the ratio $V_A/V_B$ satisfies the above values and the total volume $V_A+V_B$ satisfies the above values.

Furthermore, the fibrous substance (C) may be contained in the separator of the present invention. Containing the fibrous substance (C) can also further increase the strength and dimensional stability of the separator.

There are no particular limitations on the material for the fibrous substance (C) as long as the fibrous substance (C) has a heat-resistant temperature of 150°C or higher (a temperature at which no deformation is visually observed), has electrical insulation properties, is electrochemically stable, and is stable in the non-aqueous electrolyte of the non-aqueous electrolyte secondary battery and a solvent to be used when producing the separator. Note that the term "fibrous substance" as used in the present invention means a substance having an aspect ratio [length in longitudinal direction/ width (diameter) in direction orthogonal to longitudinal direction] of 4 or higher, and more preferably, an aspect ratio of 10 or higher.

Specific examples of the constituent material for the fibrous substance (C) include resins such as cellulose and modified products thereof (e.g., carboxymethyl cellulose (CMC) and hydroxy propyl cellulose (HPC)), polyolefin (e.g., polypropylene (PP) and copolymers of propylene), polyester (e.g., polyethylene terephthalate (PET), polyethylene naphthalate (PEN), and polybutylene terephthalate (PBT)), polyacrylonitrile (PAN), polyaramid, polyamide imide, and polyimide; and inorganic oxides such as glass, alumina, zirconia, and silica. These constituent materials may be used in a combination of two or more. Also, the fibrous substance (C) may contain various types of known additives (e.g., an antioxidant in the case of a resin) as necessary.

Furthermore, although it is sufficient that the diameter of the fibrous substance (C) is less than or equal to the thickness of the separator, the diameter is preferably in the range of 0.01 to 5 μm, for example. If the diameter is too large, entanglement of fibers of the fibrous substance will become insufficient, and when a sheet is formed to constitute the separator substrate, the strength of the separator will be small, and as a result, it may become difficult to handle the separator. If the diameter is too small, there is the risk that the pores of the separator will become too small and the effect of improving the lithium-ion permeability will be reduced.

In the separator, the fibrous substance (C) exists, for example, in such a way that the angle formed by the major axis (axis in the longitudinal direction) of the fibrous substance relative to the surface of the separator is preferably 30° or less on average, and more preferably, 20° or less on average.

The content of the fibrous substance (C) in the separator is, for example, preferably 10 vol% or more of all the constituent components, and more preferably, 20 vol% or more. Note that the content of the fibrous substance (C) in the separator is preferably 70 vol% or less, and more preferably, 60 vol% or less, and in the case where the fibrous substance (C) is used as a porous substrate, which will be described later, the content of the fibrous substance (C) in the separator is preferably 90 vol% or less, and more preferably, 80 vol% or less.

Accordingly, in the case where the fibrous substance (C) is contained in the separator-forming composition, it is desirable that the amount of the fibrous substance (C) to be added is adjusted or the amount of the separator-forming composition to be applied to the surface of the porous substrate made of the fibrous substance (C) is adjusted so that the content of the fibrous substance (C) in the produced separator satisfies the above values.

Furthermore, from the viewpoint of further increasing the level of safety of the non-aqueous electrolyte secondary battery to be used, it is preferable for the separator of the present invention to have a shut-down function. In order to provide the separator with a shut-down function, conceivable methods include, for example, causing the separator to contain a thermoplastic resin having a melting point of 80°C to 140°C (which is hereinafter referred to as a "heat melting resin (D)"), and causing the separator to contain a resin that absorbs a liquid non-aqueous electrolyte (or a non-aqueous electrolyte solution, hereinafter which may be referred to as an "electrolyte solution") and swells by application of heat and whose degree of swelling increases as the temperature rises (which is hereinafter referred to as a "heat swelling resin (E)"). With the separator that is provided with a shut-down function using the above-described method, when heat is generated in the non-aqueous electrolyte secondary battery, the heat melting resin (D) melts and closes the pores of the separator, or the heat swelling resin (E) absorbs the non-aqueous electrolyte (liquid non-aqueous electrolyte) in the non-aqueous electrolyte secondary battery, thereby causing a shutdown by which the progress of the electrochemical reaction is suppressed.

In order to produce a separator containing the heat melting resin (D) or the heat swelling resin (E) using the method of the present invention, it is sufficient for the separator-forming composition to contain the heat melting resin (D) or the heat swelling resin (E).

The heat melting resin (D) is a resin having a melting point or a melting temperature of 80°C to 140°C measured using a DSC according to the provision of JIS K 7121. The heat melting resin (D) is preferably made of an electrochemically stable material that has electrical insulation properties, is stable in the non-aqueous electrolyte of the non-aqueous electrolyte secondary battery or a solvent used when producing the separator, and is further less susceptible to oxidation reduction in the operating voltage range of the non-aqueous electrolyte secondary battery. Specific examples of the material include polyethylene (PE), polypropylene (PP), copolymerized polyolefin, polyolefin derivative (e.g., chlorinated polyethylene), polyolefin wax, petroleum wax, and carnauba wax. One example of the copolymerized polyolefin is ethylene-vinyl monomer copolymers, and more specific examples thereof include ethylene-propylene copolymers, EVA, and ethylene-acrylic acid copolymers such as ethylene-methyl acrylate copolymers and ethylene-ethyl acrylate copolymers. In the copolymerized polyolefin, it is preferable for an ethylene-derived structural unit to have a molar concentration of 85 mol% or more. It is also possible to use polycycloolefin or the like. As the heat melting resin (D), the above-listed resins may be used singly or in a combination of two or more.

As the heat melting resin (D), PE, polyolefin wax, PP, or EVA in which the ethylene-derived structural unit has a molar concentration of 85 mol% or more are preferably used from among the above-listed materials. Furthermore, the heat melting resin (D) may contain various types of known additives (e.g., an antioxidant), which are to be added to the resin, as necessary.

The heat swelling resin (E) is usually a resin having properties in which in the temperature range where the battery is used (approximately 70°C or lower), it absorbs no or a limited amount of electrolyte and therefore the degree of swelling is less than or equal to a fixed value, whereas, when heated to a required temperature (Tc), it significantly swells as a result of absorbing the electrolyte and the degree of swelling increases as the temperature rises. In the non-aqueous electrolyte secondary battery using a separator that contains the heat swelling resin (E), if the battery is in the temperature range lower than Tc, the lithium ion conductivity inside the separator will be high because a fluidizable electrolyte that is not absorbed by the heat swelling resin (E) is present in the pores of the separator, and as a result, the non-aqueous electrolyte secondary battery can have excellent load characteristics. On the other hand, if the battery is heated to or above a temperature at which the property of increasing the degree of swelling with increasing temperature (hereinafter also referred to as a "heat swelling property") appears, the heat swelling resin (E) will absorb the electrolyte in the device and swell significantly, as a result of which the swelled heat swelling resin (E) will close the pores in the separator, the amount of the fluidizable electrolyte will decrease, and the non-aqueous electrolyte secondary battery will run out of electrolyte. This suppresses the reactivity of the electrolyte and the active materials, thereby further increasing the safety of the non-aqueous electrolyte secondary battery. Besides, if the temperature becomes higher than Tc, the electrolyte depletion will further progress due to the heat swelling property and the battery reaction will be further suppressed, which further increases the safety of the battery at high temperatures.

The temperature at which the heat swelling resin (E) starts to exhibit the heat swelling property is preferably 75°C or higher. This is because, by setting the temperature at which the heat swelling resin (E) starts to exhibit the heat swelling property to 75°C or higher, the temperature (Tc) at which the lithium ion conductivity is significantly reduced and the internal resistance of the element is increased can be set to approximately 80°C or higher. On the other hand, Tc of the separator rises as the lower limit of the temperature at which the heat swelling resin (E) starts to exhibit the heat swelling property increases. Thus, in order to set Tc to approximately 130°C or lower, the temperature at which the heat swelling resin (E) starts to exhibit the heat swelling property is preferably set to 125°C or lower, and more preferably, 115°C or lower. If the temperature at which the heat swelling resin (E) starts to exhibit the heat swelling property is too high, the thermal runaway reaction of the active materials in the device will not be suppressed sufficiently, and there is the possibility that a sufficient effect of improving the safety of the non-aqueous electrolyte secondary battery cannot be ensured. Also, if the temperature at which the heat swelling resin (E) starts to exhibit the heat swelling property is too low, the lithium ion conductivity in the ordinary temperature range where the non-aqueous electrolyte secondary battery is used (approximately 70°C or lower) may become too low.

Furthermore, at temperatures lower than the temperature at which the heat swelling resin (E) starts to exhibit the heat swelling property, it is desirable for the heat swelling resin (E) to not absorb the electrolyte as much as possible and swell as little as possible. This is because, in the temperature range where the non-aqueous electrolyte secondary battery is used (e.g., at room temperature), the non-aqueous electrolyte secondary battery will have more excellent load or other characteristics if the electrolyte is held in the pores of the separator in a fluidizable state, rather than being taken into the heat swelling resin (E).

Although there are no particular limitations on the forms of the heat melting resin (B) and the heat swelling resin (E) (which are hereinafter also collectively referred to as a "shutdown resin"), they are preferably in the form of fine particles. It is sufficient for the particle size of the resin in the dry state to be smaller than the thickness of the separator, and the average particle size is preferably 1/100 to 1/3 of the thickness of the separator, and specifically, the average particle size is in the range of 0.1 to 20 $\mu$m. If the particle size of the shutdown resin particles is too small, the interstices between the particles will become small, and there is the risk that the ion conduction path will be elongated and cause degradation in the characteristics of the non-aqueous electrolyte secondary battery. Furthermore, if the particle size of the shutdown resin particles is too large, the interstices between the particles will increase, and there is the risk that the effect of improving the resistance to short circuiting caused by lithium dendrites or the like will be reduced. Note that the average particle size of the shutdown resin particles can be defined as, for example, a number-average particle size measured by dispersing these fine particles in a medium (e.g., water) that does not swell the shutdown resin, using a laser scattering particle distribution analyzer (e.g., "LA-920" manufactured by Horiba Ltd.).

Furthermore, the shutdown resin may be in a form other than those described above, and may be present in a state in which it is integrally laminated on the surface of another constituent element such as inorganic particles or a fibrous substance. Specifically, the shutdown resin may exist as core-shell structured particles in which inorganic particles serve as the core and the shutdown resin serves as the shell. As another example, the shutdown resin may be fiber having a double-layer structure in which the shutdown resin is present on the surface of a core material.

In order to efficiently achieve the shutdown effect, the content of the shutdown resin in the separator is preferably as follows, for example. Among the total volume of the constituent components of the separator, the volume of the shutdown resin is preferably 10 vol% or more, and more preferably, 20 vol% or more. On the other hand, in terms of ensuring the dimensional stability of the separator at high temperatures, the volume of the shutdown resin among the total volume of the constituent components of the separator is preferably 50 vol% or less, and more preferably, 40 vol% or less.

The separator of the present invention is constituted by a single porous layer containing the resin (A) and optionally the inorganic particles (B), the fibrous substance (D), the shutdown resin or the like. The porous layer may be in the form of an independent film, or a configuration is also possible in which the porous layer is integrated with an electrode (positive or negative electrode) or a porous substrate (which will be described in detail later) of the non-aqueous electrolyte secondary battery.

The separator of the present invention can be produced, for example, using a method of the present invention that includes a step (1) of applying a separator-forming composition that contains at least an oligomer and a solvent, to a base substrate, a step (2) of forming a resin (A) having a crosslinked structure by applying energy rays to a coating film of the separator-forming composition applied to the base substrate, and a step (3) of forming pores by drying the coating film of the separator-forming composition that has been irradiated with energy rays.

As the separator-forming composition, such a composition (such as slurry) is used that includes an oligomer, a monomer, and a polymerization initiator, and optionally, the inorganic particles (B), the fibrous substance (C), or the shutdown resin particles to be contained in the separator, and in which these constituent components are dispersed in a solvent.

The solvent used in the separator-forming composition is preferably such a solvent that can uniformly disperse or dissolve components such as the oligomer, the monomer, and the polymerization initiator. In general, for example, organic solvents including aromatic hydrocarbons such as toluene, furans such as tetrahydrofuran, ketones such as methyl ethyl ketone or methyl isobutyl ketone, and the like are preferably used. For the purpose of controlling interfacial tension, alcohol (such as ethylene glycol or propylene glycol), any type of propylene oxide-based glycol ethers such as monomethyl acetate, or the like may be added to the solvent as appropriate. Furthermore, water may be used as the solvent, in which case alcohols (such as methyl alcohol, ethyl alcohol, isopropyl alcohol, or ethylene glycol) may be added as appropriate in order to control interfacial tension.

Note that, as the solvent, a solvent (a) that has relatively high affinity to the resin (A), and a solvent (b) whose affinity to the resin (A) is lower than the solvent (a) but that has a higher boiling point than the solvent (a) are preferably used in combination. The solvent used in the separator-forming composition evaporates by drying in the step (3), thus contributing to the formation of pores in the separator. In the case where the solvent (a) and the solvent (b) are used in combination, the formation of pores in the step (3) progresses more favorably and a large number of highly uniform micropores can be formed. Accordingly, the separator can have more stable lithium-ion permeability as a whole.

In general, an energy ray-sensitive polymerization initiator is contained in the separator-forming composition. Specific examples of the polymerization initiator include bis-(2, 4, 6-trimethylbenzoyl)-phenyl phosphine oxide, 2, 2-dimethoxy-2-phenyl acetophenone, and 2-hydroxy-2-methyl propiophenone. The amount of the polymerization initiator to be used is preferably 1 to 10 parts by mass with respect to 100 parts by mass of the total amount of the oligomer and the monomer (the amount of the oligomer when only the oligomer is used).

In the separator-forming composition, the solid content including the oligomer, the monomer, and the polymerization initiator and the optionally used inorganic particles (B) or the like is preferably 10 to 50 mass%, for example.

Examples of the base substrate to which the separator-forming composition is applied include an electrode (positive or negative electrode) of the non-aqueous electrolyte secondary battery, a porous substrate, and a substrate such as a film or a metal foil.

In the case where an electrode of the non-aqueous electrolyte secondary battery is used as the base substrate, a separator that is integrated with the electrode can be produced. In the case where a porous substrate is used as the base substrate, a multilayer structured separator consisting of the porous substrate and a layer formed from the separator-forming composition can be produced. In the case where a substrate such as a film or a metal foil is used as the base substrate, a separator as an independent film can be produced by separating the formed separator from the substrate.

Examples of the porous substrate used as the base substrate include porous sheets such as woven fabrics composed of at least one of fibrous substances containing any of the above-listed materials as constituent components, and non-woven fabrics having structures in which these fibrous substances are entangled. More specific examples include non-woven fabrics such as paper, PP non-woven fabrics, polyester non-woven fabrics (e.g., PET non-woven fabrics, PEN non-woven fabrics, and PBT non-woven fabrics), and PAN non-woven fabrics.

Furthermore, the porous substrate may be a microporous film that is widely used as the separator of non-aqueous electrolyte secondary batteries (e.g., a microporous film made of polyolefin such as PE or PP). The separator can also be provided with a shut-down function by using such a porous substrate. Note that such a porous substrate generally has low heat resistance and, for example due to a temperature rise inside the non-aqueous electrolyte secondary battery, may shrink and thereby cause short circuiting as a result of contact between the positive electrode and the negative electrode. However, in the case of the separator produced by the method of the present invention, a layer that contains the resin (A) having excellent heat resistance is formed on the surface of such a porous substrate, and this layer serves to suppress thermal shrinkage of the porous substrate. Accordingly, the separator can constitute a non-aqueous electrolyte secondary battery having a high level of safety.

When applying the separator-forming composition to the base substrate, various types of known application methods can be employed. Furthermore, in the case of using an electrode of the non-aqueous electrolyte secondary battery or a porous substrate as the base substrate, the separator-forming composition may be impregnated in the base substrate.

In the step (2) in the method of the present invention, the resin (A) is formed by applying energy rays to the coating film of the separator-forming composition that has been applied to the base substrate.

Examples of the energy rays to be applied to the coating film of the separator-forming composition include visible light, ultraviolet ray, X-rays, and electron rays. It is, however, to be noted that using visible light or ultraviolet rays is more preferable in terms of securing a higher level of safety.

In the irradiation with energy rays, it is preferable for the wavelength, the irradiation strength, the irradiation time or the like of the energy rays to be adjusted as appropriate in order to form the resin (A) favorably. A specific example is given in which the wavelength of the energy rays can be set in the range of 320 to 390 nm, and the irradiation strength can be set in the range of 623 to 1081 mJ/cm$^2$, for example. However, the conditions for the irradiation with energy rays are not limited to the above conditions.

In the step (3) in the method of the present invention, the coating film of the separator-forming composition that has been irradiated with energy rays is dried so as to remove the solvent and form pores. As to conditions for drying (temperature, time, and drying method), appropriate conditions under which the solvent used in the separator-forming composition can be removed favorably may be selected depending on the type of the solvent. As one specific example, the drying temperature may be set in the range of 20 to 80°C, the drying time may be set in the range of 30 minutes to 24 hours, and the drying method may be an air-dry method or a method using a constant-temperature bath, a dryer, or a hot plate (in the case where the separator is directly formed on the electrode surface). However, the conditions for drying in the step (3) are not limited to the above conditions.

In the case where a substrate such as a film or a metal foil is used as the base substrate, as described above, the separator formed through the step (3) is separated from the base substrate as described above and is used for production of a non-aqueous electrolyte secondary battery. On the other hand, in the case where an electrode or a porous substrate is used as the base substrate, the formed separator (or layer) can be used as-is for production of a non-aqueous electrolyte secondary battery, without being separated from the base substrate.

Also, the separator may be provided with a shutdown resin by forming a layer containing the above-described shutdown resin (e.g., a layer formed of only the shutdown resin or a layer including the shutdown resin and a binder) on one or both sides of the produced separator.

Note that methods other than the method of the present invention may be employed for production of the separator of the present invention. For example, the separator of the present invention can also be produced using a method in which the above-described steps (1) and (2) are performed using a composition obtained by adding a material that can dissolve in a specific solvent (a solvent other than the solvent used in the separator-forming composition) to a separator-forming composition, the separator-forming composition is then dried as necessary, and thereafter the above material is extracted using the specific solvent so as to form pores.

Examples of the material that can dissolve in the specific solvent include, for example, polyolefin resins, polyurethane resins, and acrylic resins. The material is preferably in the form of particles, for example, and the size and amount of the material to be used can be adjusted depending on the porosity and pore size required for the separator. Normally, the average particle size of the above material (the average particle size measured by the same method as used when measuring the average particle size of the inorganic particles (B)] is preferably in the range of 0.1 to 20 μm, and the amount of the material to be used is preferably in the range of 1 to 10 mass%, of the total solid content in the separator-forming composition.

It is preferable for the separator of the present invention to have a porosity of 10% or more in order to ensure the amount of the electrolyte held and achieve favorable lithium-ion permeability in the dry state. On the other hand, from the viewpoint of ensuring the strength of the separator and preventing internal short circuiting, the porosity of the separator is preferably 70% or less in the dry state. The porosity of the separator in the dry state, P(%), can be calculated by obtaining the total sum of components *i* from the thickness of the separator, the mass of the separator per unit area, and the densities of the constituent components, using the following formula (1):

$$P = \{1 \cdot (m/t)/(\Sigma a_i \cdot \rho_i)\} \times 100 \qquad (1)$$

In the above formula, $a_i$ is the ratio of the components $i$ when the total mass is taken as 1, $\rho_i$ is the densities of the components $i$ (g/cm$^3$), $m$ is the mass of the separator per unit area (g/cm$^2$), and t is the thickness of the separator (cm).

Furthermore, it is desirable for the separator of the present invention to have a Gurley value of 10 to 300 sec in a state in which the resin B have been dissolved and dried, the Gurley value being measured using the method in accordance with JIS P 8117 and indicating the number of seconds in time required for 100 ml of air to pass through the film under pressure of 0.879 g/mm$^2$. If the Gurley value is too large, the lithium-ion permeability may be reduced. On the other hand, if the Gurley value is too small, the strength of the separator may be reduced. Moreover, in terms of the strength of the separator, the separator desirably has a piercing strength of 50 g or more, which is measured with a needle having a diameter of 1 mm. If the piercing strength is too small, there are cases where short circuiting occurs due to the separator being penetrated when lithium dendrites occur. By employing such a configuration, it is possible to obtain a separator that has the above-described Gurley value and piercing strength.

The thickness of the separator of the present invention is preferably 6 $\mu$m or more, and more preferably, 10 $\mu$m or more from the viewpoint of isolating the positive electrode and the negative electrode from each other with greater reliability. On the other hand, if the separator is too thick, the energy density of the battery may be reduced. For this reason, the thickness of the separator is preferably 50 $\mu$m or less, and more preferably, 30 $\mu$m or less.

The non-aqueous electrolyte secondary battery of the present invention includes a positive electrode, a negative electrode, a separator, and a non-aqueous electrolyte. There are no particular limitations on the configuration and structure of the separator as long as the separator is the separator of the present invention, and it is possible to apply various types of configurations and structures that have been employed for conventionally known non-aqueous electrolyte secondary batteries.

Examples of the form of the non-aqueous electrolyte secondary battery include cylindrical shapes (such as rectangular cylindrical shapes and circular cylindrical shapes) in which a steel can, an aluminum can or the like is used as an outer case. The non-aqueous electrolyte secondary battery may also be a soft package battery in which a laminated film with a metal deposited thereon is used as an outer case.

As the positive electrode, there is no particular limitations as long as it is a positive electrode used in conventionally known non-aqueous electrolyte secondary batteries, or in other words, a positive electrode containing an active material capable of absorbing and desorbing Li ions. Examples of the active material include layer-structured lithium-containing transition metal oxides represented by $Li_{1+x}MO_2$ (where $-0.1 < x < 0.1$, and M is Co, Ni, Mn, Al, Mg, or the like), spinel-structured lithium manganese oxides such as $LiMn_2O_4$ and other oxides obtained by substituting part of $LiMn_2O_4$ with another element, and olivine type compounds represented by $LiMPO_4$ (where M is Co, Ni, Mn, Fe or the like). Specific examples of the layer-structured lithium-containing transition metal oxides include $LiCoO_2$, $LiNi_{1-x}Co_{x-y}Al_yO_2$ (where $0.1 \leq x \leq 0.3$, $0.01 \leq y \leq 0.2$), and oxides containing at least Co, Ni, and Mn (e.g., $LiMn_{1/3}Ni_{1/3}Co_{1/3}O_2$, $LiMn_{5/12}Ni_{5/12}Co_{1/6}O_2$, and $LiMn_{3/5}Ni_{1/5}Co_{1/5}O_2$).

A positive-electrode active material-containing layer is formed on, for example, a current collector, using a positive-electrode material mixture obtained by mixing a conductivity enhancing agent and a binder with an active material. The conductivity enhancing agent may be a carbon material such as carbon black, and the binder may be a fluorocarbon resin such as PVDF.

The current collector of the positive electrode can, for example, be a foil, a punched metal, a mesh, or an expanded metal made of metal such as aluminum. Normally, an aluminum foil having a thickness of 10 to 30 $\mu$m is preferably used.

A lead portion of the positive electrode is usually provided by, at the time of producing the positive electrode, leaving part of the current collector without forming the positive-electrode active material-containing layer so that an exposed portion remains in the current collector, and then forming the exposed portion into the lead portion. However, the lead portion is not always required to be initially integrated with the current collector, and may be provided by connecting an aluminum foil or the like to the current collector in a later step.

As the negative electrode, there is no particular limitations as long as it is a negative electrode used in conventionally known non-aqueous electrolyte secondary batteries, or in other words, a negative electrode that contains an active material capable of absorbing and desorbing Li ions. The active material may be one or a mixture of two or more of carbon-based materials capable of absorbing and desorbing Li ions, such as graphite, pyrolytic carbon, coke, glassy carbon, baked products of organic polymer compounds, mesocarbon microbeads (MCMB), and carbon fiber. The negative-electrode active material may also be a compound that is capable of charging/discharging at a low voltage close to that of lithium metal, examples of which include an element such as Si, Sn, Ge, Bi, Sb or In, an alloy of these elements, lithium-containing nitrides or oxides. The negative-electrode active material may also be a lithium metal or an alloy of lithium and aluminum. The negative electrode may be an electrode that is obtained by, for example, appropriately adding a conductivity enhancing agent (e.g., a carbon material such as carbon black), a binder such as PVDF, or the like to the above-described negative-electrode active material so as to obtain a negative-electrode material mixture and then finishing the negative-electrode material mixture into a molded article (a negative-electrode active material-containing layer) using a current collector as a core material. Alternatively, the negative electrode may be an electrode that is composed only of a foil made of any of the above-described alloys or lithium metal, or that is obtained by laminating such a foil on the current collector.

In the case where a current collector is used in the negative electrode, the current collector may be a foil, a punched metal, a mesh, or an expanded metal made of copper or nickel. Normally, a copper foil is used. In the case where the entire thickness of the negative electrode is reduced so as to achieve a battery having a high energy density, the upper limit for the thickness of the current collector of the negative electrode is preferably 30 $\mu$m, and the lower limit therefor is desirably 5 $\mu$m. Furthermore, a lead portion on the negative electrode side may be formed in the same manner as the lead portion on the positive electrode side.

The electrodes can be used in the form of a laminated electrode group in which the above-described positive and negative electrodes are laminated with the separator of the present invention interposed therebetween, or in the form of a wound electrode group that is obtained by winding this laminated electrode group. Note that the separator of the present invention also has excellent resistance to short circuiting when it is bent, by the action of the resin (A) having excellent flexibility. This effect is more remarkable in the case of using a wound electrode group that alters the shape of the separator for the non-aqueous electrolyte secondary battery of the present invention using the above separator. In particular, this effect is really remarkable in the case of using a flat-shaped wound electrode group (a wound electrode group having a flat-shaped cross section) that causes the separator to be bent with great force.

As the non-aqueous electrolyte, a solution (non-aqueous electrolyte solution) in which a lithium salt is dissolved in an organic solvent is used. As the lithium salt, there are not particular limitations as long as it can dissociate into Li$^+$ ions in the solvent and does not easily cause a side reaction, such as decomposition, in the voltage range in which the battery is used. Examples of the lithium salt include inorganic lithium salts such as LiClO$_4$, LiPF$_6$, LiBF$_4$, LiAsF$_6$, and LiSbF$_6$; and organic lithium salts such as LiCF$_3$SO$_3$, LiCF$_3$CO$_2$, Li$_2$C$_2$F$_4$(SO$_3$)$_2$, LiN(CF$_3$SO$_2$)$_2$, LiC(CF$_3$SO$_2$)$_3$, LiC$_n$F$_{2n+1}$SO$_3$ (n$\geqq$2), and LiN(RfOSO$_2$)$_2$ (where Rf is a fluoroalkyl group).

As the organic solvent used in the non-aqueous electrolyte, there is no particular limitations as long as it can dissolve the above-listed lithium salts and does not cause a side reaction such as decomposition in the voltage range in which the battery is used. Examples of the organic solvent include cyclic carbonates such as ethylene carbonate, propylene carbonate, butylene carbonate, and vinylene carbonate; chain carbonates such as dimethyl carbonate, diethyl carbonate and methyl ethyl carbonate; chain esters such as methyl propionate; cyclic esters such as $\gamma$-butyrolactone; chain ethers such as dimethoxyethane, diethyl ether, 1, 3-dioxolane, diglyme, triglyme, and tetraglyme; cyclic ethers such as dioxane, tetrahydrofuran, and 2-methyltetrahydrofuran; nitriles such as acetonitrile, propionitrile, and methoxy propionitrile; and sulfite esters such as ethylene glycol sulfite. These may be used in a combination of two or more. In order to obtain a battery having more favorable characteristics, it is desirable to use a combination of these solvents that can provide high conductivity, such as a solvent mixture of ethylene carbonate and a chain carbonate. For the purpose of improving characteristics such as safety, charge/discharge cycle characteristics, and high temperature storage characteristics, additives such as vinylene carbonate, 1,3-propane sultone, diphenyl disulfide, cyclohexane, biphenyl, fluorobenzene, and t-butyl benzene may be added as appropriate to the non-aqueous electrolyte.

The concentration of the lithium salt in the non-aqueous electrolyte is preferably in the range of 0.5 to 1.5 mol/L, and more preferably, in the range of 0.9 to 1.3 mol/L.

Furthermore, the non-aqueous electrolyte may be used in the form of a gel (gel electrolyte) by adding thereto a known gelling agent such as a polymer.

Examples

Hereinafter, the present invention will be described in detail using examples. It is, however, to be noted that the examples given below are not intended to limit the present invention.

Example 1

Preparation of Separator-Forming Slurry

A separator-forming slurry was prepared through a process that involves adding zirconia beads having a diameter $\varphi$ of 1mm in an amount (mass base) five times that of boehmite to 80 parts by mass of urethane acrylate serving as the oligomer ("EBECRYL 8405" manufactured by DAICEL-CYTEC Co. Ltd.), 20 parts by mass of tripropylene glycol diacrylate serving as the monomer, 2 parts by mass of bis(2,4,6-trimethyl benzoy)-phenylphosphine oxide serving as the photopolymerization initiator, 300 parts by mass of boehmite (with an average particle size of 1$\mu$m) serving as the inorganic particles (B), and 600 parts by mass of a solvent mixture of ethyl acetate serving as the solvent (a) and dodecane serving as the solvent (b) at a volume ratio of 9:1, then uniformly stirring them for 15 hours using a ball mill, and filtering them.

Production of Negative Electrode

A negative-electrode material mixture-containing paste was prepared by uniformly mixing 95 parts by mass of graphite serving as the negative-electrode active material and 5 parts by mass of PVDF, using N-methyl-2-pyrrolidone (NMP) as a solvent. Then, a negative electrode was produced through a process that involves intermittently applying this paste to both sides of a 10-$\mu$m-thick current collector made of a copper foil such that the front side had an application length of 290 mm and the back side had an application length of 230 mm, drying them, performing calender processing so as to adjust the thickness of the negative-electrode active material-containing layer such that the total thickness was 142 $\mu$m, and cutting the layer to a width of 45 mm. Thereafter, a tab was attached to a portion of the negative electrode where the copper foil was exposed.

Production of Integrated Unit of Separator and Negative Electrode

A separator having a thickness of 20 $\mu$m was formed on both sides of the negative electrode by applying the separator-forming slurry to both sides of the negative electrode, irradiating them with ultraviolet rays having a wavelength of 365 nm for 10 seconds and irradiance of 1000 mW/cm$^2$, and then drying them at 60°C for one hour. In these separators, the ratio $V_A/V_B$ between the volume $V_A$ of the resin (A) and the volume $V_B$ of the inorganic particles (B) was 0.85.

Preparation of Positive Electrode

A positive-electrode material mixture-containing paste was prepared by uniformly mixing 90 parts by mass of LiCoO$_2$ serving as the positive-electrode active material, 7 parts by mass of acetylene black serving as the conductivity enhancing agent, and 3 parts by mass of PVDF serving as the binder, using NMP as the solvent. Then, a positive electrode was produced by intermittently applying this paste to both sides of an aluminum foil having a thickness of 15 $\mu$m, which is to serve as a current collector, such that the front side had an application length of 280 mm and the back side had an application length of 210mm, then drying them, performing calendar processing so as to adjust the thickness of the positive-electrode active material-containing layer such that the total thickness was 150 $\mu$m, and cutting the layer to a width of 43 mm. Thereafter, a tab was attached to a portion of the positive electrode where the aluminum foil was exposed.

Assembly of Battery

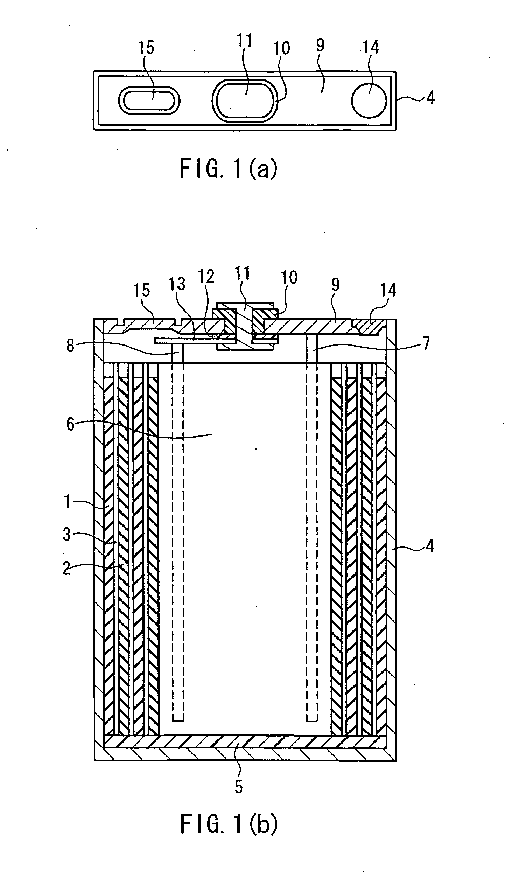

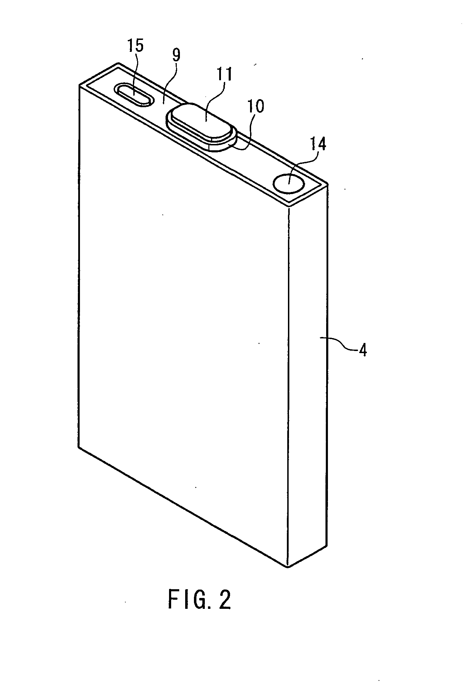

A wound electrode group was produced by laminating the integrated unit of the separator and negative electrode, and the positive electrode one above another and spirally winding them. The produced wound electrode group was then pressed into a flat shape and housed in an aluminum outer can having a thickness of 4 mm, a height of 50 mm and a width of 34 mm. Then, an electrolyte (which was obtained by dissolving LiPF$_6$ at a concentration of 1.2 mol/L in a solvent mixture of ethylene carbonate and ethyl methyl carbonate at a volume ratio of 1:2) was injected into the outer can, and thereafter the outer can was sealed. As a result, a non-aqueous electrolyte secondary battery having the structure shown in FIGS. 1 and the outer appearance shown in FIG. 2 was produced.

Referring now to FIGS. 1 and 2, FIG. 1(a) is a plan view of the non-aqueous electrolyte secondary battery and FIG. 1(b) is a partial vertical cross-sectional view thereof. In the non-aqueous electrolyte secondary battery, a positive electrode 1 and a negative electrode 2 with a separator 3 interposed therebetween are spirally wound into a wound electrode group 6 as described above and housed in a rectangular outer can 4 together with a non-aqueous electrolyte. It is, however, to be noted that, in order to simplify the illustration, the metal foils serving as the current collectors used when producing the positive electrode 1 and the negative electrode 2 and the electrolyte are not shown in FIGS. 1.

The outer can 4 is made of an aluminum alloy and constitutes an outer member of the battery. It also functions as a positive electrode terminal. An insulator 5 formed from a polyethylene sheet is disposed on the bottom of the outer can 4, and a positive-electrode current collector plate 7 and a negative-electrode current collector plate 8 that are connected respectively to the ends of the positive electrode 1 and the negative electrode 2 are drawn from the wound electrode group 6 including the positive electrode 1, the negative electrode 2, and the separator 3. A terminal 11 made of stainless steel is attached to a lid plate 9 made of an aluminum alloy for sealing the opening of the outer can 4 with a polypropylene insulation packing 10 interposed therebetween, and a lead plate (electrode-terminal current-collecting mechanism) 13 made of stainless steel is attached to the terminal 11 with an insulator 12 interposed therebetween.

The opening of the outer can 4 is sealed by inserting the lid plate 9 into the opening of the outer can 4 and welding the joint portions of the outer can 4 and the lid plate 9, as a result of which the interior of the battery is sealed.

Note that the lid plate 9 is provided with an electrolyte inlet (indicated by 14 in FIGS. 1 and 2). In the assembly of the battery, an electrolyte is injected into the battery from this electrolyte inlet, which is thereafter sealed. The lid plate 9 is also provided with a explosion-proof safety valve 15.

In the battery of Example 1, welding the positive-electrode current collector plate 7 directly to the lid plate 9 allows the outer can 4 and the lid plate 9 to function as a positive-electrode terminal. Likewise, welding the negative-electrode current collector pate 8 to the lead plate 13 and then electrically connecting the negative-electrode current collector plate 8 and the terminal 11 via the lead plate 13 allows the terminal 11 to function as a negative-electrode terminal. Note that the polarity (positive/negative) may be reversed depending on the material for the outer can 4.

FIG. 2 is a perspective view schematically illustrating the outer appearance of the battery shown in FIGS. 1. FIG. 2 is shown for the purpose of indicating that the battery is a rectangular battery. The battery is schematically illustrated in FIG. 2, in which only specific constituent members of the battery are shown. Similarly, in FIGS. 1, the innermost portion of the electrode group is not shown in cross section.

Example 2

A separator-forming slurry was prepared in the same manner as in Example 1, except that the monomer was changed to 1, 6-hexanediol diacrylate. An integrated unit of separators and a negative electrode was produced in the same manner as in Example 1, except that this separator-forming slurry was used. In the separators, the ratio $V_A/V_B$ between the volume $V_A$ of the resin (A) and the volume $V_B$ of the inorganic particles (B) was 0.82.

Then, a non-aqueous electrolyte secondary battery was produced in the same manner as in Example 1, except that the above integrated unit of the separators and the negative electrode was used.

Example 3

A separator-forming slurry was prepared in the same manner as in Example 1, except that the oligomer was changed to urethane acrylate ("EBECRYL 8402" manufactured by DAICEL-CYTEC Co. Ltd) and the monomer was changed to tetraethylene glycol diacrylate. An integrated unit of separators and a negative electrode was produced in the same manner as in Example 1, except that this separator-forming slurry was used. In the separators, the ratio $V_A/V_B$ between the volume $V_A$ of the resin (A) and the volume $V_B$ of the inorganic particles (B) was 0.82.

Then, a non-aqueous electrolyte secondary battery was produced in the same manner as in Example 1, except that the above integrated unit of the separators and the negative electrode was used.

Example 4

A separator-forming slurry was prepared in the same manner as in Example 3, except that the monomer was changed to polyethylene glycol diacrylate. An integrated unit of separators and a negative electrode was produced in the same manner as in Example 1, except that this separator-forming slurry was used. In the separators, the ratio $V_A/V_B$ between the volume $V_A$ of the resin (A) and the volume $V_B$ of the inorganic particles (B) was 0.98.

Then, a non-aqueous electrolyte secondary battery was produced in the same manner as in Example 1, except that the above integrated unit of the separators and the negative electrode was used.

Example 5

A separator-forming slurry was prepared in the same manner as in Example 3, except that monomer was changed to dipentaerythritol pentaacrylate. An integrated unit of separators and a negative electrode was produced in the same manner as in Example 1, except that this separator-forming slurry was used. In the separators, the ratio $V_A/V_B$ between the volume $V_A$ of the resin (A) and the volume $V_B$ of the inorganic particles (B) was 0.82.

Then, a non-aqueous electrolyte secondary battery was produced in the same manner as in Example 1, except that the above integrated unit of the separators and the negative electrode was used.

Example 6

A separator-forming slurry was prepared in the same manner as in Example 1, except that the oligomer was changed to 100 parts by mass of urethane acrylate ("EBECRYL 8210" manufactured by DAICEL-CYTEC Co. Ltd) and the monomer was changed to 0 parts by mass. An integrated unit of separators and a negative electrode was produced in the same manner as in Example 1, except that this separator-forming slurry was used. In the separators, the ratio $V_A/V_B$ between the volume $V_A$ of the resin (A) and the volume $V_B$ of the inorganic particles (B) was 0.84.

Then, a non-aqueous electrolyte secondary battery was produced in the same manner as in Example 1, except that the above integrated unit of the separators and the negative electrode was used.

Example 7

A separator-forming slurry was prepared in the same manner as in Example 1, except that the inorganic particles were changed to 0 parts by mass. An integrated unit of separators and a negative electrode was produced in the same manner as in Example 1, except that this separator-forming slurry was used.

Then, a non-aqueous electrolyte secondary battery was produced in the same manner as in Example 1, except that the above integrated unit of the separators and the negative electrode was used.

Example 8

A separator-forming slurry, which was the same as prepared in Example 1, was applied to a PET film that has undergone silicon-release processing, irradiated for 10 seconds with ultraviolet rays having a wavelength of 365 nm and irradiance of 1000 mW/cm$^2$, and then dried at 60°C for one hour. Thereafter, the slurry was peeled off from the PET film so as to produce a separator having a thickness of 20 μm. The produced separator was then cut to a width of 47 mm. In the separator, the ratio $V_A/V_B$ between the volume $V_A$ of the resin (A) and the volume $V_B$ of the inorganic particles (B) was 0.85.

A negative electrode, which was the same as produced in Example 1, and a positive electrode, which was the same as produced in Example 1, were laminated one above another with the separator interposed therebetween and were spirally wound so as to produce a wound electrode group. Then, a non-aqueous electrolyte secondary battery (a battery including the separator that was not integrated with the negative electrode) was produced in the same manner as in Example 1, except that this wound electrode group was used.

Comparative Example 1

A separator-forming slurry was prepared in the same manner as in Example 1, except that the oligomer was not used and that the monomer was changed to 100 parts by mass of dipentaerythritol pentaacrylate. An integrated unit of separators and a negative electrode was produced in the same manner as in Example 1, except that this separator-forming slurry was used. In the separators, the ratio $V_A/V_B$ between the volume $V_A$ of the resin (A) and the volume $V_B$ of the inorganic particles (B) was 0.83.

Then, a non-aqueous electrolyte secondary battery was produced in the same manner as in Example 1, except that the above integrated unit of the separators and the negative electrode was used.

Comparative Example 2

A separator-forming slurry was prepared in the same manner as in Example 1, except that the oligomer was not used and that the monomer was changed to 100 parts by mass of 1, 6-hexanediol diacrylate. An integrated unit of separators and a negative electrode was produced in the same manner as in Example 1, except that this separator-forming slurry was used. In the separators, the ratio $V_A/V_B$ between the volume $V_A$ of the resin (A) and the volume $V_B$ of the inorganic particles (B) was 0.84.

Then, a non-aqueous electrolyte secondary battery was produced in the same manner as in Example 1, except that the above integrated unit of the separators and the negative electrode was used.

Comparative Example 3

A separator-forming slurry was prepared in the same manner as in Example 1, except that the oligomer was not used and that the monomer was changed to 100 parts by mass of polyethylene glycol diacrylate. An integrated unit of separators and a negative electrode was produced in the same manner as in Example 1, except that this separator-forming slurry was used. In the separators, the ratio $V_A/V_B$ between the volume $V_A$ of the resin (A) and the volume $V_B$ of the inorganic particles (B) was 1.12.

Then, a non-aqueous electrolyte secondary battery was produced in the same manner as in Example 1, except that the above integrated unit of the separators and the negative electrode was used.

Comparative Example 4

A commercially available microporous film made of polyolefin (having a thickness of 20 $\mu$m) was used, and a positive electrode, which was the same as produced in Example1, and a negative electrode, which was the same as produced in Example 1 (a negative electrode on which no separators were formed), were laminated one above another with the separator interposed therebetween and were spirally wound so as to produce a wound electrode group. Then, a non-aqueous electrolyte secondary battery was produced in the same manner as in Example 1, except that this wound electrode group was used.

The following evaluations were made on the separators of the non-aqueous electrolyte secondary batteries produced in Examples 1 to 8 and Comparative Examples 1 to 4.

Measurement of Tg of Crosslinking Resin

The separator-forming compositions prepared in Examples 1 to 8 and Comparative Examples 1 to 3 were each applied to a polytetrafluoroethylene sheet, irradiated for 10 seconds with ultraviolet rays having a wavelength 365 nm and irradiance of 1000 mW/cm$^2$, and then dried at 60°C for one hour so as to form a 20-$\mu$m-thick porous film containing the resin (A). Using this porous film, the Tg of the crosslinking resin constituting the separator was then measured with the above-described method.

Measurement ofAir Permeability of Separator

The air permeabilities of the separators of the non-aqueous electrolyte secondary batteries produced in Examples 1 to 8 and Comparative Examples 1 to 4 were measured using the above-described method. Note that the air permeabilities of the separators of the non-aqueous electrolyte secondary batteries produced in Examples 1 to 8 and Comparative Examples 1 to 3 were measured using the porous films produced when measuring the Tg of the resins (A).

Furthermore, the following evaluations were made on the non-aqueous electrolyte secondary batteries produced in Examples 1 to 8 and Comparative Examples 1 to 4.

Shelf Test at 150°C

The non-aqueous electrolyte secondary batteries of Examples and Comparative Examples were each charged to 4.2 V with a constant current value of 0.2 C and thereafter charged with a constant voltage value of 4.2 V The total charging time from the start of the constant-current charging to the end of the constant-voltage charging was 10 hours. The charged batteries were then left as-is for 60 minutes in a constant-temperature bath set at 150°C, and were thereafter taken out of the constant-temperature bath and allowed to cool, under which condition the voltages of the batteries were measured. After the measurement of the voltages, the batteries were disassembled in order to visually observe the conditions of the separators.

Charge/Discharge Test (Evaluation of Load Characteristics)

The non-aqueous electrolyte secondary batteries of Examples and Comparative Examples (batteries different from those on which the shelf test at 150°C was carried out) were each subjected to constant-current charging and constant-voltage charging under the same conditions as in the shelf test at 150°C, and were then discharged to 2.5 V with a constant current value of 0.2 C, under which condition the discharge capacities (0.2-C discharge capacities) of the batteries were measured. Thereafter, the batteries were subjected to constant-current charging and constant-voltage charging under the same conditions as described, and thereafter discharged to 2.5V with a constant current value of 2 C, under which condition the discharge capacities (2-C discharge capacities) of the batteries were measured. Then, the capacity retention rates of the batteries were obtained by dividing the 2-C discharge capacities of the batteries by the 0.2-C discharge capacities thereof, the values of which were expressed in percentage. It can be said that the higher the capacity retention rates, the better the load characteristics of the batteries.

Evaluation of Charge/Discharge Cycle Characteristics

The non-aqueous electrolyte secondary batteries of Examples and Comparative Examples (batteries different from those on which the shelf test at 150°C or the charge/discharge test was carried out) were charged to 4.2 V with a constant current value of 1 C and thereafter charged with a constant voltage value of 4.2 V The total charging time from the start of the constant-current charging to the end of the constant-voltage charging was three hours. The charged batteries were then discharged to 2.5 V with a constant current value of 1 C. A series of these operations were taken as a single cycle, and 300 cycles of charging and discharging were executed on each of the batteries. Then, the capacity retention rates of the batteries were obtained by dividing the discharge capacities of the batteries after the 300 cycles by the discharge capacities thereof after the first cycle, the values of which were expressed in percentage. It can be said that the higher the capacity retention rates, the better the charge/discharge cycle characteristics of the batteries.

Table 1 shows the results of the above-described evaluations made on the separators, and Table 2 shows the results of the above-described evaluations made on the non-aqueous electrolyte secondary batteries.

Table 1

|  | Tg of Crosslinking Resin (°C) | Air Permeability (set/100 ml) |
|---|---|---|
| Example 1 | 52 | 40 |
| Example 2 | 33 | 65 |
| Example 3 | 16 | 210 |
| Example 4 | 1 | 360 |
| Example 5 | 27 | 180 |
| Example 6 | 68 | 110 |
| Example 7 | 53 | 250 |
| Example 8 | 52 | 40 |
| Comparative Example 1 | 90 | 230 |
| Comparative Example 2 | 43 | 580 |
| Comparative Example 3 | -40 | >600 |
| Comparative Example 4 | - | 90 |

Table 2

|  | Shelf Test at 150°C | | Load Characteristics Capacity Retention Rate (%) | Charge/Discharge Cycle Characteristics Capacity Retention Rate (%) |
|---|---|---|---|---|
|  | Battery Voltage (V) | Condition of Separator | | |
| Example 1 | 3.8 | No Great Change | 95 | 93 |
| Example 2 | 3.8 | No Great Change | 92 | 91 |
| Example 3 | 3.8 | No Great Change | 85 | 83 |
| Example 4 | 3.8 | No Great Change | 82 | 82 |
| Example 5 | 3.8 | No Great Change | 87 | 85 |
| Example 6 | 3.8 | No Great Change | 82 | 80 |
| Example 7 | 3.8 | Partial Shrinkage in End Face | 78 | 76 |
| Example 8 | 3.8 | No Great Change | 93 | 93 |
| Comparative Example 1 | 3.8 | Peeled Off | 55 | 45 |
| Comparative Example 2 | 3.8 | Partially Peeled Off | 64 | 56 |
| Comparative Example 3 | 0 | No Great Change | 43 | 23 |

(continued)

| | Shelf Test at 150°C | | Load Characteristics Capacity Retention Rate (%) | Charge/Discharge Cycle Characteristics Capacity Retention Rate (%) |
|---|---|---|---|---|
| | Battery Voltage (V) | Condition of Separator | | |
| Comparative Example 4 | 0.1 | Shrinkage | 93 | 90 |

As shown in Tables 1 and 2, the non-aqueous electrolyte secondary batteries of Examples 1 to 8, which were each produced by polymerizing at least an oligomer by irradiation with energy rays and each include a separator that contains the resin (A) having an appropriate value of Tg, all had high capacity retention rates at the time of evaluating their load characteristic and high capacity retention rates at the time of evaluating their charge/discharge cycle characteristics, thus having excellent load characteristics and excellent charge/discharge cycle characteristics. Furthermore, in the non-aqueous electrolyte secondary battery of Comparative Example 4 using a commercially available microporous film of polyolefin as the separator, the battery voltage dropped significantly due to the occurrence of shrinkage in the separator through the shelf test at 150°C. In contrast, the non-aqueous electrolyte secondary battery of Examples 1 to 8 maintained high voltage even after the shelf test at 150°C, thus showing high reliability. Furthermore, in the non-aqueous electrolyte secondary battery of Example 7 including the separator that did not contain inorganic particles, although shrinkage was observed in part of the separator after the shelf test at 150°C, the degree of shrinkage was extremely small as compared with the separator of the battery of Comparative Example 54 and thus the battery still had a high level of safety. The non-aqueous electrolyte secondary batteries of Example 1 to 6 and 8, each including a separator containing inorganic particles, had a higher level of safety because there were no significant changes in the separators after the shelf test at 150°C.

In contrast to this, the battery of Comparative Example 1, which included the separator containing a crosslinking resin having a too high Tg, and the battery of Comparative Example 2, which included the separator containing a crosslinking resin obtained by polymerizing only the monomer by irradiation with energy rays, both had low capacity retention rates at the time of evaluating their load characteristics and low capacity retention rates at the time of evaluating their charge/discharge cycle characteristics. Therefore, the separators were peeled off from the negative electrodes after the shelf test at 150°C. As to the crosslinking resin constituting the separator in the battery of Comparative Example 1, it can be thought that the separator shrunk on curing due to the high Tg of the crosslinking resin, which caused the separator to be peeled off from the negative electrode and thereby caused degradation in the load characteristics and charge/discharge cycle characteristics. As to the crosslinking resin constituting the separator in the battery of Comparative Example 2, it can be thought that the crosslinking resin had insufficient flexibility because it was obtained from only the monomer being polymerized, which caused the separator to be peeled off from the negative electrode and thereby caused degradation in the load characteristics and the charge/discharge cycle characteristics

Moreover, in the battery of Comparative Example 3, which included the separator containing a crosslinking resin having a too low Tg, the separator had low lithium-ion permeability because of its high air permeability, as a result of which the capacity retention rate at the time of evaluating the load characteristics and the capacity retention rate at the time of evaluating the charge/discharge cycle characteristics were both low. Thus, as to the separator in the battery of Comparative Example 3, it can be thought that because the separator is constituted by a crosslinking resin having a low Tg, micropores cannot be formed favorably, as a result of which the lithium-ion permeability of the separator is reduced.

Industrial Applicability

The non-aqueous electrolyte secondary battery of the present invention can be used for applications similar to those of conventionally known non-aqueous electrolyte secondary batteries.

Description of Reference Numerals

| | |
|---|---|
| 1 | Positive electrode |
| 2 | Negative electrode |
| 3 | Separator |

**Claims**

1.  A separator for non-aqueous electrolyte secondary batteries, to be used in a non-aqueous electrolyte secondary battery, comprising:

    at least a resin (A) having a crosslinked structure,
    wherein the resin (A) having the crosslinked structure is obtained by applying energy rays to at least an oligomer that is capable of being polymerized by irradiation with energy rays, and
    the resin (A) has a glass transition temperature higher than 0°C and lower than 80°C.

2.  The separator for non-aqueous electrolyte secondary batteries according to claim 1, wherein the resin (A) having the crosslinked structure is obtained by applying energy rays to an oligomer and a monomer that are capable of being polymerized by irradiation with energy rays.

3.  The separator for non-aqueous electrolyte secondary batteries according to claim 2, wherein the oligomer and the monomer, which form the resin (A) having the crosslinked structure, are bi- or higher functional.

4.  The separator for non-aqueous electrolyte secondary batteries according to claim 2 or 3, wherein
    the oligomer, which forms the resin (A) having the crosslinked structure, is at least one selected from the group consisting of an urethane acrylate oligomer, an epoxy acrylate oligomer, and a polyester acrylate oligomer, and
    the monomer, which forms the resin (A) having the crosslinked structure, is at least one selected from the group consisting of bifunctional acrylate, trifunctional acrylate, tetrafunctional acrylate, pentafunctional acrylate, and hexafunctional acrylate.

5.  The separator for non-aqueous electrolyte secondary batteries according to any one of claims 2 to 4, wherein the ratio in mass between the oligomer and the monomer, which form the resin (A) having the crosslinked structure, is in the range of 65:35 to 90:10.

6.  The separator for non-aqueous electrolyte secondary batteries according to any one of claims 1 to 5, further comprising inorganic particles.

7.  A non-aqueous electrolyte secondary battery comprising, as constituent elements, at least a positive electrode in which a positive-electrode material mixture layer is formed on a surface of a current collector, a negative electrode in which a negative-electrode material mixture layer is formed on a surface of a current collector, and a porous separator,
    the separator being a separator for non-aqueous electrolyte secondary batteries according to any one of claims 1 to 6.

8.  The non-aqueous electrolyte secondary battery according to claim 7, wherein the separator is integrated with at least one of the positive electrode and the negative electrode.

9.  A method for producing a separator for non-aqueous electrolyte secondary batteries according to any one of claims 1 to 6, comprising the steps of
    applying a separator-forming composition to a base substrate, the separator-forming composition containing at least a solvent and an oligomer that is capable of being polymerized by irradiation with energy rays;
    forming a resin (A) having a crosslinked structure by applying energy rays to a coating film of the separator-forming composition applied to the base substrate; and
    forming pores by drying the coating film of the separator-forming composition that has been irradiated with energy rays.

FIG. 1 (a)

FIG. 1 (b)

FIG. 2

## INTERNATIONAL SEARCH REPORT

| | International application No. |
|---|---|
| | PCT/JP2011/072307 |

| A. CLASSIFICATION OF SUBJECT MATTER |
|---|
| *H01M2/16*(2006.01)i |

According to International Patent Classification (IPC) or to both national classification and IPC

| B. FIELDS SEARCHED |
|---|
| Minimum documentation searched (classification system followed by classification symbols)<br>H01M2/16 |

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| Y | JP 2010-170770 A (Hitachi Maxell, Ltd.),<br>05 August 2010 (05.08.2010),<br>claims 3, 10; paragraphs [0016], [0021],<br>[0055]; examples<br>(Family: none) | 1,6-9 |
| Y | JP 2008-210791 A (Hitachi Maxell, Ltd.),<br>11 September 2008 (11.09.2008),<br>paragraph [0034]<br>(Family: none) | 1,6-9 |
| A | JP 2011-181195 A (Hitachi Maxell Energy,<br>Ltd.),<br>15 September 2011 (15.09.2011),<br>entire text<br>(Family: none) | 1-9 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 31 May, 2012 (31.05.12) | 12 June, 2012 (12.06.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2011/072307 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2005-340134 A  (Nitto Denko Corp.),<br>08 December 2005 (08.12.2005),<br>claims 1 to 3; paragraph [0015]; examples<br>(Family: none) | 1-9 |

Form PCT/ISA/210 (continuation of second sheet) (July 2009)

**REFERENCES CITED IN THE DESCRIPTION**

**Patent documents cited in the description**

- JP 2010170770 A